# FASCICULE DE BREVET EUROPEEN

(11) **EP 1 170 330 B1**
(45) Date de publication et mention de la délivrance du brevet: **20.04.2005**
(21) Numéro de dépôt: 01401600.0
(22) Date de dépôt: 18.06.2001
(51) Int. Cl.: C08K 13/06, C08L 23/28

(54) **Composition isolante résistante à l'huile et à la propagation de feu et procédé de mise en oeuvre de celle-ci**
Ölbeständige, flammhemmende Isolierungszusammensetzung und Verfahren zu ihrer Anwendung
Oil resistant, flame retardant insulating composition and process for using the same

(30) Priorité: 19.06.2000 FR 0007791
(43) Date de publication de la demande: 09.01.2002
(73) Titulaire: Nexans, 75008 Paris (FR)
(72) Inventeur: Chriqui, Gilles, 69100 Villeurbanne (FR)
(74) Mandataire: Lenne, Laurence

(56) Documents cités:
- EP-A- 0 300 401
- FR-A- 1 543 109
- FR-A- 2 419 957
- DATABASE WPI Section Ch, Week 198304 Derwent Publications Ltd., London, GB; Class A18, AN 1983-08122K XP002160352 & JP 57 200456 A (FUJIKURA CABLE WORKS LTD), 8 décembre 1982 (1982-12-08)
- DATABASE WPI Section Ch, Week 198208 Derwent Publications Ltd., London, GB; Class A17, AN 1982-14769E XP002160353 & JP 57 008203 A (FUJIKURA CABLE WORKS LTD), 16 janvier 1982 (1982-01-16)

## Description

La présente invention concerne les compositions isolantes, qui sont résistantes à l'huile et à la propagation du feu, sont extrudables et réticulables et sont destinées en particulier à l'industrie des câbles. Elle concerne également les procédés de mise en oeuvre et notamment de réticulation de telles compositions.

Les compositions visées par l'invention sont plus précisément celles qui satisfont la norme d'harmonisation européenne CENELEC HD22.1 S 3, catégories EM2 et EM7, et autres normes ou spécifications équivalentes relatives à la résistance à l'huile et aux flammes et conviennent au revêtement d'isolation ou de gainage de conducteurs électriques relativement souples, plus particulièrement pour les câbles d'équipement et d'intégrateur.

Le document FR-A-2419957 divulgue une composition polymérique résistante à l'huile et au feu, qui comporte un copolymère d'éthylène-acétate de vinyle (EVA), un polyéthylène chloré (CPE) et de l'alumine hydratée. Cette composition contient de 10 à 50 parties de CPE et de 70 à 300 parties d'alumine hydratée, pour 100 parties en poids d'EVA, ce copolymère d'EVA contenant de 20 à 90% en poids d'acétate de vinyle (VA). Elle comporte en outre un agent d'accrochage du type silane, ne devant pas gêner la réticulation de la composition ni se dégrader pendant la transformation de celle-ci. Cette composition est réticulée par voie chimique ou par irradiation. Elle comporte à cet effet un peroxyde de réticulation.

Pour la mise en oeuvre de la composition, ce document enseigne de mélanger intensivement les différents constituants entre eux, à l'exclusion de l'agent de réticulation, en portant la température à environ 121°C. La température est ensuite abaissée au dessous de 113°C environ et le peroxyde est alors ajouté, en continuant de mélanger jusqu'à ce que la composition soit uniforme. Cette composition est alors transformée, puis extrudée sur un fil et réticulée en tube vapeur ou en autoclave.

Le fil ainsi isolé est relativement rigide, notamment du fait de la présence d'EVA utilisé en combinaison avec le CPE et l'alumine hydratée, pour l'obtention des propriétés requises de la composition extrudée et réticulée. De plus, la mise en oeuvre de cette composition est longue et son mode de réticulation coûteux et peu commode.

D'autres compositions connues, qui sont isolantes et résistantes à l'huile et à la propagation de la flamme, sont à base de polyoléfines chlorées, plus particulièrement de CPE, qui sont greffées silane pour leur réticulation.

Ainsi, les documents JP-A-57008203 et FR-A-2618152 divulguent un procédé de greffage d'une polyoléfine chlorée, en particulier de CPE, par un amino-silane, pour sa réticulation à l'air ou au contact d'eau en présence d'un catalyseur de condensation / hydrolyse des silanols.

Pour le greffage silane du CPE dans des conditions satisfaisantes, le document FR-A-2618152 divulgue en outre de réaliser ce greffage en présence d'un accepteur d'acide à une température comprise entre 150 et 200°C. Cet accepteur d'acide est choisi parmi les sels basiques de métaux lourds, tels que de plomb, de baryum et de cadmium.

Selon ce même document FR-A-2618152, le procédé de greffage silane et de réticulation du CPE peut se dérouler en une ou deux phases. Dans le procédé une phase, on mélange les agents liquides tels que l'amino-silane et le catalyseur, puis on ajoute ce mélange liquide aux autres constituants, notamment le CPE et l'accepteur d'acide, dans un mélangeur à poudre pour l'obtention d'un mélange homogène alors chargé dans la trémie d'une extrudeuse classique. Dans le procédé en deux phases, on stocke les ingrédients sous forme de deux constituants séparés, à savoir d'une part le CPE greffé amino-silane et d'autre part le catalyseur. Au moment de la réticulation, le catalyseur mélangé à du CPE, qui est de même nature que le CPE greffé mais non modifié par le greffage, est ajouté au CPE greffé, dans les mêmes conditions que pour la mise en oeuvre du procédé en une phase.

Les performances de ces compositions à base de CPE greffé silane sont souvent insuffisantes. En outre, l'industrialisation du procédé de mise en oeuvre est difficile et délicate. Notamment, le procédé de mise en oeuvre en une phase donne lieu à des encrassements fréquents de l'extrudeuse, alors que le procédé en deux phases conduit à une possible réticulation partielle du CPE greffé pendant le stockage de celui-ci. Par ailleurs, la composition finale réticulée est relativement onéreuse.

La présente invention a pour but l'obtention d'une formulation des compositions réticulables comportant une polyoléfine chlorée, qui évite les inconvénients de compositions connues précitées.

Elle a pour objet une composition isolante, résistante à l'huile et à la propagation du feu, extrudable et réticulable, comportant une polyoléfine chlorée et un amino-silane de réticulation, caractérisée en ce qu'elle comporte un mélange de base comprenant ladite polyoléfine chlorée et, pour 100 parties en poids de celle-ci, de 100 à 250 parties en poids d'une charge minérale contenant de l'humidité et un agent de traitement de ladite charge par réaction avec l'humidité contenue dans celle-ci, et ledit amino-silane.

De manière avantageuse, la composition contient en poids 1,4 à 1,7 fois plus de charge que de polyoléfine chlorée.

L'agent de traitement de la charge est choisi pour réagir avec l'humidité contenue dans celle-ci, en la rendant moins hydrophile et permettant ainsi d'améliorer les performances mécaniques de la composition. Cet agent de traitement est en particulier un composé silane hydrolysable, qui est neutre ou très peu réactif avec la polyoléfine chlorée pour ne pas ou que très faiblement la réticuler. Il représente de 0,5 à 5 parties en poids pour 100 parties en poids de ladite charge.

La charge est à base de craie. Elle comporte très avantageusement en outre un composé d'antimoine, en particulier un oxyde d'antimoine de formule Sb2 O3, qui donne un effet ignifugeant renforcé à la charge associée à la polyoléfine chlorée, conjointement à des propriétés mécaniques également renforcées de la composition réticulée finale. La quantité de ce composé d'antimoine représente de 2 à 10% du poids total de ladite charge.

Pour la mise en oeuvre de la composition, la polyoléfine chlorée, ladite charge, ledit agent de traitement de la charge et d'autres additifs courants, tels que notamment plastifiants, lubrifiants, antioxydants et agents de résistance aux radiations UV, sont mélangés dans un mélangeur interne ou un mélangeur continu, tout en chauffant l'ensemble, pour l'obtention d'un mélange de base homogène. La température de ce mélange de base rendu homogène atteint 130°C. Le mélange de base ainsi obtenu est alors déchargé et transformé par passage sur un cylindre froid, découpe et granulation, pour être stocké jusqu'à son utilisation, c'est-à-dire son extrusion sur un câble et sa réticulation résultante.
Cette extrusion se fait sur une extrudeuse classique, avec un profil de température de 90°C à 145°C, en ajoutant un amino-silane et un catalyseur de condensation de silanols au mélange de base, directement dans la trémie de l'extrudeuse.

Cet amino-silane réagit directement avec la polyoléfine chlorée, sans être nullement désactivé par la charge dont la teneur en humidité est très faible dans le mélange de base, pour son greffage sur ladite polyoléfine chlorée sans dégagement résultant d'acide chlorhydrique, puis la réticulation à l'air de la composition extrudée.

La quantité d'amino-silane ajouté est de 0,8 à 4 parties en poids pour 100 parties dudit mélange de base. Le catalyseur de condensation des silanols, en particulier un sel d'étain, représente 0,01 à 0,1 partie en poids pour 100 parties dudit mélange de base.

Cet ajout de l'amino-silane et du catalyseur au mélange de base se fait en utilisant un mélange-maître constitué par un composé polymérique auxiliaire, qui contient ces constituants initialement liquides mais reste pour autant sous forme solide. Un tel composé polymérique auxiliaire est aisé à mélanger uniformément avec ledit mélange de base, pour ainsi permettre la diffusion uniforme de l'amino-silane et du catalyseur dans le mélange de base et le greffage homogène dans l'extrudeuse, puis la réticulation à l'air de la polyoléfine chlorée. Ce polymère polymérique auxiliaire est notamment un polymère poreux ou gonflant ou un encapsulat, ayant une grande capacité d'absorption / adsorption de silane. C'est par exemple un polyéthylène poreux ne réagissant pas ou très peu avec l'amino-silane et contenant au moins son propre poids de celui-ci.

En variante, cet ajout de l'amino-silane et du catalyseur se fait par injection de ces constituants liquides dans la trémie de l'extrudeuse, sur le mélange maître auquel est alors ajouté un polymère auxiliaire à pouvoir d'absorption quasi instantanée des constituants liquides injectés. Un tel polymère auxiliaire est par exemple un polymère poreux dit fini, qui se présente sous forme de granulés mais est ensuite traité mécaniquement pour accroître suffisamment sa vitesse d'adsorption de constituants liquides mis à son contact, ou un polymère poreux dit non fini tel que celui connu sous la dénomination Spherilene. Il retient les liquides injectés directement dans la trémie de l'extrudeuse pour venir les diffuser uniformément dans le mélange de base et la polyoléfine chlorée dudit mélange de base, puis le greffage homogène de ladite polyoléfine chlorée dans l'extrudeuse puis sa réticulation à l'air.

La composition et sa mise en oeuvre selon la présente invention offrent de nombreux avantages, notamment :
. la formulation sous forme de mélange de base est simple et rapide ;
. la composition est de coût moindre du fait de la charge importante qu'elle contient ;
. l'extrusion est faite sur une extrudeuse classique ;
. les câbles munis d'une isolation ou d'un gainage réalisé en cette composition sont plus légers, souples et plus économiques, tout en ayant une résistance à l'huile et au feu satisfaisant les exigences de normes particulièrement sévères.

Des tests effectués ont permis de mettre en évidence les propriétés de la composition conforme à l'invention :
- résistance à la rupture : 11 MPa
- allongement à la rupture : 390 %
- fluage à chaud à 200°C / sous contrainte de 0,2 MPa / 15mn :
   . allongement sous-contrainte : 35 %
   . rémanence après contrainte : 5 %
- résistance à l'huile minérale IRM 902 / 24 heures / 100°C
   ■ variation de la résistance à la rupture : -20 %
   ■ variation de l'allongement à la rupture : ≅0 %
- vieillissement en étuve 7 jours / 120°C :
   ■ variation de la résistance à la rupture : -15 %
   ■ variation d'allongement à la rupture : +15 %

## Revendications

1. Composition isolante, résistante à l'huile et à la propagation du feu, extrudable et réticulable, comportant une polyoléfine chlorée et un amino-silane de réticulation, **caractérisée en ce qu'**elle comporte un mélange de base comprenant ladite polyoléfine chlorée et, pour 100 parties en poids de celle-ci, de 100 à 250 parties en poids d'une charge minérale à base de craie comportant un composé d'antimoine et contenant de l'humidité et un agent de traitement de ladite charge par réaction avec l'humidité contenue dans celle-ci, et ledit amino-silane.

2. Composition selon la revendication 1, **caractérisée en ce que** ledit agent de traitement de ladite charge est un composé silane, sensiblement neutre vis-à-vis de ladite polyoléfine chlorée.

3. Composition selon la revendication 2, **caractérisée en ce qu'**elle comporte de 0,5 à 5 parties en poids dudit agent de traitement pour 100 parties en poids de ladite charge.

4. Composition selon l'une des revendications 1 à 3, **caractérisée en ce que** ladite charge comporte un composé d'antimoine, à raison de 2 à 10% du poids total de ladite charge.

5. Composition selon l'une des revendications 1 à 4, **caractérisée en ce qu'**elle comporte un composé polymérique auxiliaire de rétention temporaire et diffusion d'au moins ledit amino-silane dans ladite composition.

6. Composition selon la revendication 5, **caractérisée en ce que** ledit composé polymérique auxiliaire est choisi parmi les polymères aptes à contenir au moins ledit amino-silane tout en restant sous forme solide et ceux aptes à adsorber quasi-instantanément au moins ledit amino-silane.

7. Composition selon l'une des revendications 1 à 6, **caractérisée en ce qu'**elle comporte 1,4 à 1,7 fois plus de ladite charge que de polyoléfine chlorée, en poids.

8. Procédé de mise en oeuvre de la composition selon l'une des revendications 1 à 7, **caractérisé en ce qu'**il consiste à mélanger ensemble, tout en chauffant, ladite polyoléfine chlorée, ladite charge et ledit agent de traitement, pour l'obtention dudit mélange de base rendu homogène et alors transformé, et à ajouter ledit amino-silane au mélange de base transformé, lors de l'extrusion de celui-ci.

9. Procédé selon la revendication 8, **caractérisé en ce que** ledit mélange de base est réalisé à une température atteignant 130°C environ.

10. Procédé selon l'une des revendications 8 et 9 , **caractérisé en ce qu'**il consiste à mélanger ledit mélange de base transformé et un composé polymérique auxiliaire solide contenant ledit amino-silane, dans une trémie d'extrudeuse.

11. Procédé selon l'une des revendications 8 et 9, **caractérisé en ce qu'**il consiste à injecter ledit amino-silane sur ledit mélange de base transformé auquel est ajouté un composé polymérique auxiliaire adsorbant quasi-instantanément ledit amino-silane injecté, dans une trémie d'extrudeuse.

12. Procédé selon l'une des revendications 10 à 11, **caractérisé en ce que** l'extrusion de ladite composition est faite à une température de 90 à 145°C.

## Patentansprüche

1. Ölbeständige und flammhemmende, extrudierbare und vernetzbare Isolierungszusammensetzung, die ein chloriertes Polyolefin und ein Aminosilan zur Vernetzung, **dadurch gekennzeichnet, dass** sie eine Grundmischung umfasst, die das chlorierte Polyolefin und auf 100 Gewichtsteile dieses 100 bis 250 Gewichtsteile eines mineralischen Füllstoffs auf Basis von Kreide, der eine Antimonverbindung umfasst und Feuchtigkeit und ein Behandlungsmittel für den Füllstoff durch Reaktion mit der in diesem enthaltenen Feuchtigkeit enthält, und das Aminosilan umfasst.

2. Zusammensetzung nach Anspruch 1, **dadurch gekennzeichnet, dass** das Behandlungsmittel für den Füllstoff eine gegenüber dem chlorierten Polyolefin im Wesentlichen neutrale Silanverbindung ist.

3. Zusammensetzung nach Anspruch 2, **dadurch gekennzeichnet, dass** sie von 0,5 bis 5 Gewichtsteile des Behandlungsmittels auf 100 Gewichtsteile des Füllstoffs umfasst.

4. Zusammensetzung nach einem der Ansprüche 1 bis 3, **dadurch gekennzeichnet, dass** der Füllstoff eine Antimonverbindung in einer Menge von insgesamt 2 bis 10 Gew.-% des Füllstoffs umfasst.

5. Zusammensetzung nach einem der Ansprüche 1 bis 4, **dadurch gekennzeichnet, dass** er eine Hilfs-Polymerverbindung zum vorübergehenden Zurückhalten und Verbreiten wenigstens des Aminosilans in der Zusammensetzung.

6. Zusammensetzung nach Anspruch 5, **dadurch gekennzeichnet, dass** die Hilfs-Polymerverbindung aus den Polymeren ausgewählt ist, die geeignet sind, wenigstens das Aminosilan zu enthalten, wobei sie in fester Form bleiben, und denjenigen, die geeignet sind quasi sofort wenigstens das Aminosilan zu adsorbieren.

7. Zusammensetzung nach einem der Ansprüche 1 bis 6, **dadurch gekennzeichnet, dass** sie an Masse 1,4 bis 1,7 mal mehr Füllstoff als chloriertes Polyolefin umfasst.

8. Verfahren zur Anwendung der Zusammensetzung nach einem der Ansprüche 1 bis 7, **dadurch gekennzeichnet, dass** es darin besteht, unter Erwärmen das chlorierte Polyolefin, den Füllstoff und das Behandlungsmittel zusammenzumischen, um die Grundmischung zu erhalten, die homogen und dann umgesetzt wird, und das Aminosilan der umgesetzten Grundmischung bei deren Extrusion hinzuzufügen.

9. Verfahren nach Anspruch 8, **dadurch gekennzeichnet, dass** die Grundmischung bei einer Temperatur ausgeführt wird, die etwa 130°C erreicht.

10. Verfahren nach einem der Ansprüche 9 bis 9, **dadurch gekennzeichnet, dass** es darin besteht, die umgesetzte Grundmischung und eine feste Hilfs-Polymerverbindung, die das Aminosilan enthält, in einem Extrudertrichter zu mischen.

11. Verfahren nach einem der Ansprüche 8 und 9, **dadurch gekennzeichnet, dass** es darin besteht, das Aminosilan in einem Extrudertrichter auf die umgesetzte Grundmischung zu spritzen, der eine Hilfs-Polymerverbindung hinzugefügt ist, die quasi sofort das eingespritzte Aminosilan adsorbiert.

12. Verfahren nach einem der Ansprüche 10 bis 11, **dadurch gekennzeichnet, dass** die Extrusion der Zusammensetzung bei einer Temperatur von 90 bis 145°C vorgenommen wird.

## Claims

1. Insulating composition, oil-resistant, flame-retardant, extrudable and cross-linkable, containing a chlorinated polyolefin and a cross-linking amino-silane, **characterized in that** it comprises a basic mixture including said chlorinated polyolefin and, per 100 parts by weight thereof, from 100 to 250 parts by weight of a chalk-based mineral filler comprising an antimony compound and containing humidity and a treatment agent for said filler by reaction with the humidity contained therein, and said amino-silane.

2. Composition as in claim 1, **characterized in that** said treatment agent for said filler is a silane compound, substantially neutral towards said chlorinated polyolefin.

3. Composition as in claim 2, **characterized in that** it contains 0.5 to 5 parts by weight of said treatment agent per 100 parts by weight of said filler.

4. Composition as in any of claims 1 to 3, **characterized in that** said filler contains an antimony compound to the proportion of 2 to 10 % of the total weight of said filler.

5. Composition as in any of claims 1 to 4, **characterized in that** it comprises an auxiliary polymeric compound for provisionally retaining and then diffusing at least said amino-silane in said composition.

6. Composition as in claim 5, **characterized in that** said auxiliary polymeric compound is chosen from among those polymers able to contain at least said amino-silane while remaining in solid form, and those able to adsorb at least said amino-silane almost instantaneously.

7. Composition as in any of claims 1 to 6, **characterized in that** it contains 1.4 to 1.7 times more of said filler than chlorinated polyolefin, by weight.

8. Process for producing the composition as in any of claims 1 to 7, **characterized in that** it consists of mixing together under heating said chlorinated polyolefin, said filler and said treatment agent to obtain said basic mixture made homogenous and then transformed, and of adding said amino-silane to the transformed basic mixture at its time of extrusion.

9. Process as in claim 8, **characterized in that** said basic mixture is made at a temperature reaching approximately 130°C.

10. Process as in either of claims 8 and 9, **characterized in that** it consists of mixing said transformed basic mixture and a solid auxiliary polymeric compound containing said amino-silane, in the hopper of an extruder.

11. Process as in either of claims 8 and 9, **characterized in that** it consists of injecting said amino-silane onto said transformed basic mixture to which is added an auxiliary polymeric compound adsorbing said injected amino-silane almost instantaneously, in the hopper of an extruder.

12. Process as in any of claims 10 to 11, **characterized in that** the extrusion of said composition is conducted at a temperature of 90 to 145°C.
